# EUROPEAN PATENT SPECIFICATION

(11) **EP 3 758 094 B1**
(45) Date of publication and mention of the grant of the patent: **18.06.2025**
(21) Application number: 20735998.5
(22) Date of filing: 03.01.2020
(51) Int. Cl.: H01M 50/244, H01M 10/04, B23K 37/04

(54) **BATTERY PACK AND BATTERY PACK ASSEMBLY APPARATUS**
BATTERIEPACK
BLOC-BATTERIE

(30) Priority: 03.01.2019 KR 20190000643
(43) Date of publication of application: 30.12.2020
(73) Proprietor: LG Energy Solution, Ltd., Seoul 07335 (KR)
(72) Inventor: JANG, Sung Hwan, Daejeon 34122 (KR); KIM, Seong Tae, Daejeon 34122 (KR); LEE, Gyo Eun, Daejeon 34122 (KR)
(74) Representative: Plasseraud IP
(86) International application number: PCT/KR2020/000136
(87) International publication number: WO 2020/141942

(56) References cited:
- CN-U- 205 429 015
- CN-U- 206 076 305
- JP-A- 2012 084 248
- JP-A- 2012 094 358
- KR-A- 20100 087 374
- KR-A- 20180 068 158

## Description

### [Technical Field]

The present invention relates to a battery pack and a battery pack assembly apparatus used to assemble a battery pack.

### [Background Art]

This application claims the benefit of priority to Korean Patent Application No. 2019-0000643 filed on January 3, 2019.

In recent years, with an increase in the demand for portable electronic devices, such as laptop computers, smartphones, and tablet computers, research has been actively conducted on high-performance secondary batteries that are capable of being repeatedly charged and discharged.

In addition, secondary batteries have come to be widely used in medium- or large-sized devices, such as vehicles, robots, and satellites, as well as small-sized devices, such as portable electronic devices. In particular, as fossil fuels are being depleted and increasing attention is being paid to environmental pollution, research on hybrid vehicles and electric vehicles is being actively conducted. The most essential part of a hybrid vehicle or an electric vehicle is a battery pack configured to supply electric power to a motor. The battery pack includes a battery module including a plurality of battery cells, wherein the plurality of battery cells is connected to each other in series and/or in parallel, whereby the capacity and output of the battery module are increased.

Basically, a battery cell is manufactured through a process of stacking a plurality of electrode plates in the state in which a separator is disposed therebetween and welding a plurality of electrode tabs to the plurality of electrode plates, respectively, to form an electrode assembly and wrapping the electrode assembly in an aluminum pouch so as to be sealed.

The battery pack includes a housing unit configured to receive a battery cell. The housing unit is composed of an upper housing and a lower housing, and the housing unit is assembled by coupling the upper housing and the lower housing to each other.

In the process of assembling the housing unit, the upper housing is pressed against the lower housing by a jig while a contact surface of the upper housing and a contact surface of the lower housing are in contact with each other. In this state, the housing unit is assembled by welding the contact surface of the upper housing and the contact surface of the lower housing to each other.

In the case of a conventional battery pack, only an upper housing is pressed by a jig in the process of assembling a housing unit, and thus, a contact surface of the upper housing and a contact surface of a lower housing may not be in full contact. Therefore, a problem may arise in which the contact surface of the upper housing and the contact surface of the lower housing are not properly welded to each other.

In addition, in the case of the conventional battery pack, only the upper housing is pressed by the jig in the process of assembling the housing unit, and thus, the pressing force for pressing the upper housing may vary depending on an operator. Therefore, since the welding state between the upper housing and the lower housing may vary depending on the operator, a problem may arise in which the quality of the battery pack is not constant.

Additionally, CN 206 076 305 U JP 2012-084248 and CN 205429015 U relate to making batteries.

### [Disclosure]

### [Technical Problem]

The present invention has been made in view of the above problems, and it is an object of the present invention to provide a battery pack in which a first housing and a second housing constituting a housing unit are configured to press together against each other, thereby improving the welding quality between the first housing and the second housing.

It is a further object of the present disclosure to provide a battery pack assembly apparatus configured to press the first housing and the second housing against each other using a first pressing module and a second pressing module, thereby improving the welding quality between the first housing and the second housing.

### [Technical Solution]

The solution is provided by the subject matter of independent claims. Further embodiments are claimed in dependent claims.

A battery pack according to embodiments of the present invention provided to accomplish the above object includes a housing unit configured to receive a battery cell therein, the housing unit comprising a first housing including a first contact surface; and a second housing including a second contact surface opposite the first contact surface, wherein the first housing and the second housing are coupled by welding in a state in which the first contact surface and the second contact surface are in contact with each other and pressed against each other, a first support is provided on an outer surface of the first housing, the first support contacting a first pressing module that presses the first housing toward the second housing, and a second support is provided on an outer surface of the second housing, the second support contacting a second pressing module that presses the second housing toward the first housing.

The first support protrudes outward from the outer surface of the first housing and in some embodiments is formed in a flange shape including the first contact surface.

The second support protrudes outward from the outer surface of the second housing and in some embodiments is formed in a flange shape including the second contact surface.

The first support in some embodiments is formed in a rib shape protruding outward from the outer surface of the first housing.

The second support in some embodiments is formed in a rib shape protruding outward from the outer surface of the second housing.

A battery pack assembly apparatus according to the present disclosure provided to accomplish the above object may be configured to assemble a battery pack comprising a housing unit configured to receive a battery cell therein and including a first housing and a second housing, and may include a first pressing module coupled to a first support formed on an outer surface of the first housing; and a second pressing module coupled to a second support formed on an outer surface of the second housing, wherein the first pressing module and the second pressing module may be moved in a direction adjacent to each other to press the first housing and the second housing against each other.

The first support may protrude from the outer surface of the first housing and may extend in a circumferential direction of the first housing. The first pressing module may be configured to extend in the circumferential direction of the first housing to press the entire first support.

The second support may protrude from the outer surface of the second housing and may extend in a circumferential direction of the second housing. The second pressing module may be configured to extend in the circumferential direction of the second housing to press the entire second support.

### [Advantageous Effects of Invention

According to a battery pack according to an embodiment of the present invention, a first housing and a second housing constituting a housing unit of the battery pack include a first support and a second support, respectively. As the first support and the second support are pressed against each other by a first pressing module and a second pressing module of a battery pack assembly apparatus, a first contact surface of the first housing and a second contact surface of the second housing may be in close contact. Therefore, since the first contact surface and the second contact surface may be welded to each other in close contact, the first contact surface and the second contact surface may be welded uniformly, and welding defects may be prevented from occurring.

### [Brief Description of Drawings]

The following drawings appended to this specification are provided to illustrate preferred embodiments of the present invention and to aid in understanding the technical idea of the present invention together with the detailed description of the invention, a description of which will follow, and the present invention should not be interpreted as being limited only to matters described in the drawings.
FIG. 1 is a perspective view schematically showing a battery pack according to a first embodiment of the present disclosure and an example useful for understanding the background of the present invention.
FIG. 2 is a sectional view schematically showing the battery pack according to the first embodiment which is not part of the claimed invention.
FIG. 3 is a sectional view schematically showing a process of assembling a housing unit of the battery pack according to the first embodiment which is not part of the claimed invention.
FIG. 4 is a sectional view schematically showing a battery pack according to a second embodiment of the present disclosure which is an embodiment of the present invention.
FIG. 5 is a sectional view schematically showing a battery pack according to a third embodiment of the present disclosure which is another embodiment of the present invention.

### [Best Mode]

Hereinafter, a battery pack and a battery pack assembling apparatus according to an embodiment of the present disclosure and invention will be described with reference to the accompanying drawings.

Embodiments of the present invention are provided in order to more completely describe the present invention to a person having ordinary skill in the art, and therefore the shape and size of each element in the drawings may be exaggerated, omitted, or schematically illustrated for clearer description. Consequently, the size or rate of each element does not entirely reflect the actual size or rate thereof.

Hereinafter, the preferred embodiments of the present invention will be described in detail with reference to the accompanying drawings. It should be noted that terms or words used in this specification and the claims are not to be interpreted as having ordinary and dictionary-based meanings but as having meanings and concepts coinciding with the technical idea of the present invention based on the principle that the inventors may properly define the concepts of the terms in order to explain the invention in the best method.

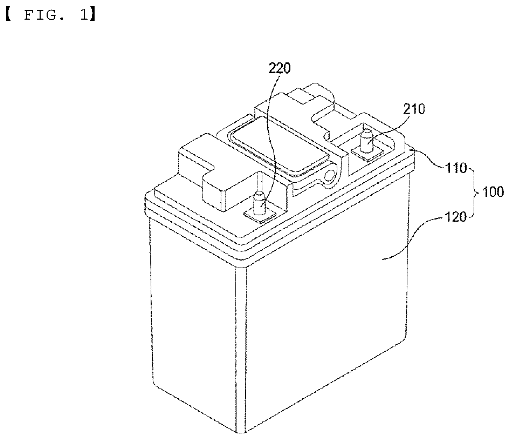

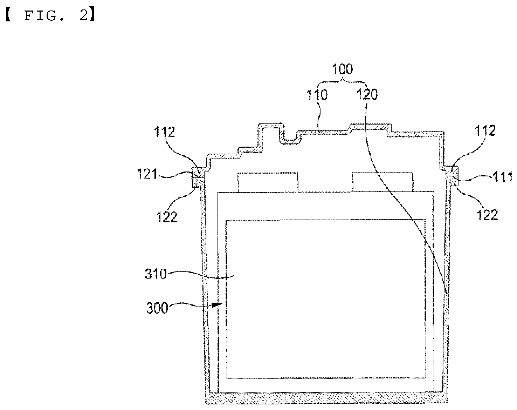

FIG. 1 is a perspective view schematically showing a battery pack according to a first embodiment of the present disclosure, and FIG. 2 is a sectional view schematically showing the battery pack according to the first embodiment of the present disclosure.

As shown in FIGS. 1 and 2, the battery pack according to the first embodiment of the present disclosure includes a housing unit 100 having an inner space, electrode terminals 210 and 220 exposed outside through through-holes (not shown) formed in the housing unit 100, and a battery module 300 disposed in the housing unit 100, the battery module having a plurality of battery cells 310.

As shown in FIG. 1, the electrode terminals 210 and 220 may be configured so as to be exposed upwards in FIG. 1.

As shown in FIG. 1, the housing unit 100 may have a roughly rectangular parallelepiped shape; however, the present invention is not limited as to the shape of the housing unit 100. The housing unit 100 serves to protect the battery module 300 from the external environment.

The housing unit 100 includes a first housing (an upper housing) 110 and a second housing (a lower housing) 120. The first housing 110 and the second housing 120 are coupled to each other such that the inner space, which is configured to receive the battery module 300, is formed in the housing unit 100.

The plurality of battery cells 310 may be received in the second housing 120. For example, each of the battery cells 310 may be a pouch-type battery cell. The pouch-type battery cell 310 may include an electrode assembly configured by stacking a plurality of electrode plates in the state in which a separator is disposed therebetween and a pouch configured to wrap the electrode assembly. The second housing 120 may have a battery cell receiving space having a width and a height corresponding respectively to the width and the length of each of the battery cells 310.

Each of the first housing 110 and the second housing 120 may be made of plastic. The first housing 110 and the second housing 120 are joined to each other by welding (for example, ultrasonic welding or laser welding). As the first housing 110 and the second housing 120 are joined to each other by welding, the interior of the housing unit 100 may have a dustproof and waterproof structure.

The first housing 110 includes a first contact surface 111 continuously formed along a circumferential direction of the first housing 110. The second housing 120 includes a second contact surface 121 continuously formed along a circumferential direction of the second housing 120 and opposite the first contact surface 111 of the first housing 110. The first contact surface 111 of the first housing 110 and the second contact surface 121 of the second housing 120 have shapes corresponding to each other and are formed to closely contact each other.

The first contact surface 111 and the second contact surface 121 each function as a welding surface. The first contact surface 111 and the second contact surface 121 are welded while being pressed against each other. For example, when ultrasonic vibration or a laser beam is applied between the first contact surface 111 and the second contact surface 121 in a state where the first contact surface 111 and the second contact surface 121 are in close contact with each other, a material constituting the first contact surface 111 and a material constituting the second contact surface 121 are melted and fused to each other, and accordingly, the first housing 110 and the second housing 120 are coupled to each other.

A battery pack assembly apparatus 400 configured to press and weld the first housing 110 and the second housing 120 against each other is provided so that the first contact surface 111 and the second contact surface 121 may be pressed against each other.

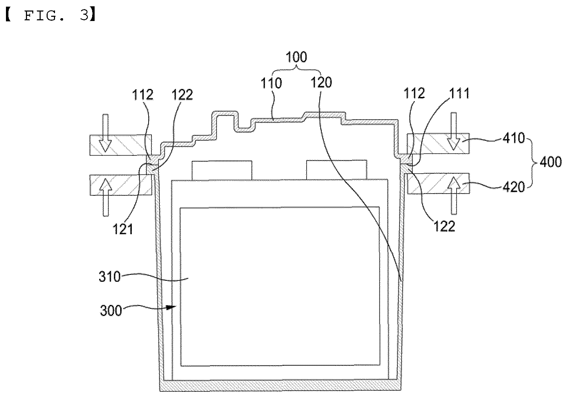

FIG. 3 is a sectional view schematically showing a process of assembling a housing unit of the battery pack according to the first embodiment of the present disclosure, which is not part of the subject matter of the independent claims 1 and 2.

As shown in FIG. 3, the battery pack assembly apparatus 400 may include a first pressing module 410 in contact with the first housing 100, the first pressing module 410 configured to press the first housing 110 toward the second housing 120; a second pressing module 420 in contact with the second housing 120, the second pressing module 420 configured to press the second housing 120 toward the first housing 110; a control module (not shown) configured to control the first pressing module 410 and the second pressing module 420 to move in a direction adjacent to each other; and a welding module (not shown) configured to weld the first contact surface 111 of the first housing 110 and the second contact surface 121 of the second housing 120 pressed by the first pressing module 410 and the second pressing module 420 to each other.

The first pressing module 410 and the second pressing module 420 may be configured to move adjacent to or spaced apart from each other by being connected to a linear movement mechanism such as, for example, an actuator operated by pneumatic or hydraulic pressure, a linear motor using electromagnetic interaction, or a ball screw device. The first pressing module 410 and the second pressing module 420 may move adjacent to each other to press the first housing 110 and the second housing 120 against each other.

As the welding module, it may be configured to apply ultrasonic vibration or a laser beam to the first contact surface 111 of the first housing 110 and the second contact surface 121 of the second housing 120 pressed by the first pressing module 410 and the second pressing module 420.

Since the first housing 110 and the second housing 120 are pressed against each other by the first pressing module 410 and the second pressing module 420, the first contact surface 111 and the second contact surface 121 may be pressed against each other to be in full contact. Since the first contact surface 111 and the second contact surface 121 may be in full contact, the first contact surface 111 and the second contact surface 121 may be uniformly welded.

As shown in FIG. 3, which is not part of the subject matter of the independent claims 1 and 2, a first support 112 in contact with the first pressing module 410 may be provided on an outer surface of the first housing 110 so that the first housing 110 may be pressed by the first pressing module 410. The first support 112 may protrude outward from the outer surface of the first housing 110. For example, the first support 112 may protrude outward from the outer surface of the first housing 110 and may be formed in a flange shape including the first contact surface 111. In this case, the first support 112 may protrude from the outer surface of the first housing 110 and extend continuously in the circumferential direction of the first housing 110 to form the first contact surface 111.

In addition, as shown in FIG. 3, a second support 122 in contact with the second pressing module 420 may be provided on an outer surface of the second housing 120 so that the second housing 120 may be pressed by the second pressing module 420. The second support 122 may protrude outward from the outer surface of the second housing 120. For example, the second support 122 may protrude outward from the outer surface of the second housing 120 and may be formed in a flange shape including the second contact surface 121. In this case, the second support 122 may protrude from the outer surface of the second housing 120 and extend continuously in the circumferential direction of the second housing 120 to form the second contact surface 121.

For example, the first pressing module 410 may be configured to extend in the circumferential direction of the first housing 110 to press the entire first support 112. Similarly, the second pressing module 420 may be configured to extend in the circumferential direction of the second housing 120 to press the entire second support 122.

According to the battery pack according to the first embodiment of the present disclosure, the first housing 110 and the second housing 120 constituting the housing unit 100 of the battery pack include the first support 112 and the second support 120, respectively. As the first support 112 and the second support 122 are pressed against each other by the first pressing module 410 and the second pressing module 420 of the battery pack assembly apparatus 400, the first contact surface 111 of the first housing 110 and the second contact surface 121 of the second housing 120 may be in full contact. Therefore, since the first contact surface 111 and the second contact surface 121 may be welded to each other in close contact, the first contact surface 111 and the second contact surface 121 may be uniformly welded, and welding defects may be prevented from occurring.

In addition, according to the battery pack according to the first embodiment of the present disclosure, since the pressing forces of the first pressing module 410 and the second pressing module 420 are transmitted to the entire first support 112 and the entire second support 122, the first contact surface 111 and the second contact surface 121 may be pressed in closer contact with each other.

In addition, according to the battery pack according to the first embodiment of the present disclosure, since the first support 112 and the second support 122 are formed in a flange shape including the first contact surface 111 and the second contact surface 121, respectively, the first contact surface 111 and the second contact surface 121 may be pressed in closer contact with each other as the first support 112 and the second support 122 are pressed by the first pressure module 410 and the second pressure module 420.

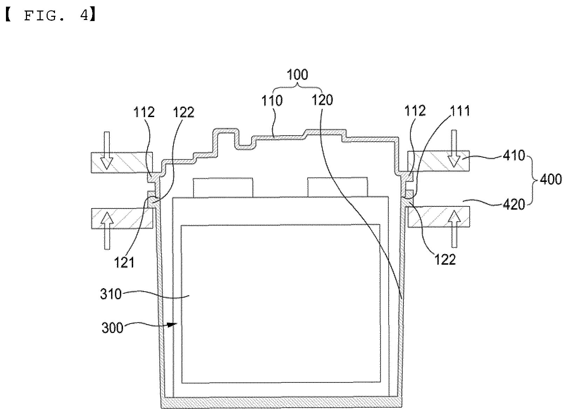

Hereinafter, a battery pack according to a second embodiment of the present disclosure and an embodiment of the invention will be described with reference to FIG. 4. Components identical to the components of the first embodiment of the present disclosure as described above are denoted by the same reference numerals, and a detailed description thereof will be omitted.

FIG. 4 is a sectional view schematically showing the battery pack according to the second embodiment of the present disclosure.

As shown in FIG. 4, in the case of battery pack according to the second embodiment of the present disclosure, a first support 112 in contact with a first pressing module 410 is provided on an outer surface of a first housing 110 so that the first housing 110 may be pressed by the first pressing module 410. The first support 112 has a rib shape protruding outward from the outer surface of the first housing 110. The first support 112 is disposed to be spaced apart from a second support 122. A first contact surface 111 is formed at an end portion extending downward from the first support 112. In accordance with the independent claim 1, the first support 112 may extend continuously in a circumferential direction of the first housing 110. Alternatively in accordance with the independent claim 1, a plurality of the first supports 112 may be formed at predetermined intervals in the circumferential direction of the first housing 110.

In addition, the second support 122 in contact with a second pressing module 420 is provided on an outer surface of a second housing 120 so that the second housing 120 may be pressed by the second pressing module 420. The second support 122 protrudes outward from the outer surface of the second housing 120. For example, the second support 122 protrudes outward from the outer surface of the second housing 120 and is formed in a flange shape including a second contact surface 121. In this case, the second support 122 may protrude from the outer surface of the second housing 120 and extend continuously in a circumferential direction of the second housing 120 to form the second contact surface 121.

According to the battery pack according to the second embodiment of the present disclosure, since the first contact surface 111 and the second contact surface 121 may be in close contact with each other by pressing the first support 112 and the second support 122 by the first pressing module 410 and the second pressing module 420, the first contact surface 111 and the second contact surface 121 may be uniformly welded.

In addition, according to the battery pack according to the second embodiment of the present disclosure, since the first contact surface 111 of the first housing 110 and the first support 112 of the first housing 110 are separately formed, a position of the first support 112 of the first housing 110 according to a pressing position of the first pressing module 410 may be freely designed regardless of a position of the first contact surface 111.

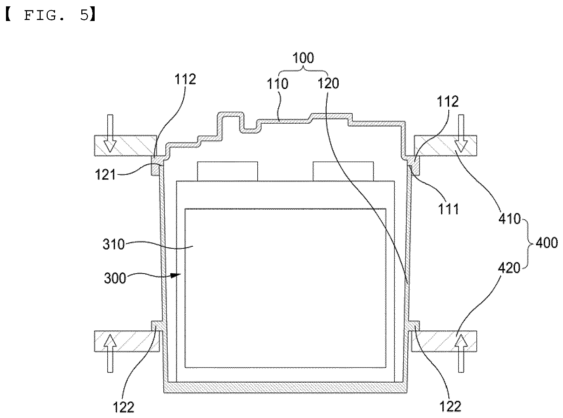

Hereinafter, a battery pack according to a third embodiment of the present disclosure will be described with reference to FIG. 5. Components identical to the components of the first and second embodiments of the present disclosure as described above are denoted by the same reference numerals, and a detailed description thereof will be omitted.

FIG. 5 is a sectional view schematically showing the battery pack according to the third embodiment of the present disclosure, which is another embodiment of the present invention.

As shown in FIG. 5, in the case of the battery pack according to the third embodiment of the present disclosure, a first support 112 in contact with a first pressing module 410 is provided on an outer surface of a first housing 110 so that the first housing 110 may be pressed by the first pressing module 410. The first support 112 protrudes outward from the outer surface of the first housing 110. In accordance with the independent claim 2 the first support 112 protrudes outward from the outer surface of the first housing 110 and is formed in a flange shape including a first contact surface 111. In this case, the first support 112 may protrude from the outer surface of the first housing 110 and extend continuously in a circumferential direction of the first housing 110 to form the first contact surface 111.

In addition, a second support 122 in contact with a second pressing module 420 is provided on an outer surface of a second housing 120 so that the second housing 120 may be pressed by the second pressing module 420. The second support 122 has a rib shape protruding outward from an outer surface of the second housing 120. The second support 122 is disposed to be spaced apart from the first support 112. A second contact surface 121 is formed at an end portion extending upward from the second support 122. In accordance with the independent claim 2, the second support 122 may extend continuously in a circumferential direction of the second housing 120. Alternatively in accordance with the independent claim 2, a plurality of the second supports 122 may be formed at predetermined intervals in the circumferential direction of the second housing 120.

According to the battery pack according to the third embodiment of the present disclosure, since the first contact surface 111 and the second contact surface 121 may be in close contact with each other by pressing the first support 112 and the second support 122 by the first pressing module 410 and the second pressing module 420, the first contact surface 111 and the second contact surface 121 may be uniformly welded.

In addition, according to the battery pack according to the third embodiment of the present disclosure, since the second contact surface 121 of the second housing 120 and the second support 122 of the second housing 120 are separately formed, a position of the second support 122 of the second housing 120 according to a pressing position of the second pressing module 420 may be freely designed regardless of a position of the second contact surface 121.

The battery pack according to the embodiment of the present disclosure may be applied to a device including the battery pack as a power source.

For example, the device may be a computer, a cellular phone, a wearable electronic device, a power tool, an electric vehicle (EV), a hybrid electric vehicle, a plug-in hybrid electric vehicle, an electric two-wheeled vehicle, an electric golf cart, or an energy storage apparatus. The energy storage apparatus may be applied to various fields or places, such as a smart-grid system configured to control the supply and demand of electric power or a charging station for electric vehicles.

The preferred embodiments of the present invention have been described illustratively; however, the scope of the present invention is not limited to such specific embodiments, and may be appropriately changed within the scope defined in the claims.

## Claims

1. A battery pack comprising:
a housing unit (100) configured to receive a battery cell therein, the housing unit comprising:
a first housing (110) including a first contact surface (111); and
a second housing (120) including a second contact surface (121) opposite the first contact surface (111), wherein
the first housing (110) and the second housing (120) are coupled by welding in a state in which the first contact surface (111) and the second contact surface (121) are in contact with each other and pressed against each other,
a first support (112) is provided on an outer surface of the first housing (110), the first support (112) being configured for contacting a first pressing module (410) that presses the first housing (110) toward the second housing (120), and
a second support (122) is provided on an outer surface of the second housing, the second support (122) being configured for contacting a second pressing module (420) that presses the second housing (120) toward the first housing (110),
wherein the second support (122) protrudes outward from the outer surface of the second housing (120) and is formed in a flange shape including the second contact surface (121),
the first support (112) is formed in a rib shape protruding outward from the outer surface of the first housing (110),
the first support (112) is disposed so that it is spaced apart from the second support (122),
the first contact surface (111) is formed at an end portion extending downward from the first support (112),and wherein
the first support (112) extends continuously in a circumferential direction of the first housing (110) or a plurality of the first supports (112) is formed at predetermined intervals in the circumferential direction of the first housing (110).

2. A battery pack comprising:
a housing unit (100) configured to receive a battery cell therein, the housing unit comprising:
a first housing (110) including a first contact surface (111); and
a second housing (120) including a second contact surface (121) opposite the first contact surface (111), wherein
the first housing (110) and the second housing (120) are coupled by welding in a state in which the first contact surface (111) and the second contact surface (121) are in contact with each other and pressed against each other,
a first support (112) is provided on an outer surface of the first housing (110), the first support (112) being configured for contacting a first pressing module (410) that presses the first housing (110) toward the second housing (120), and
a second support (122) is provided on an outer surface of the second housing, the second support (122) being configured for contacting a second pressing module (420) that presses the second housing (120) toward the first housing (110),
wherein the first support (112) protrudes outward from the outer surface of the first housing (110) and is formed in a flange shape including the first contact surface (111),
wherein the second support (122) is formed in a rib shape protruding outward from the outer surface of the second housing (120),
the second support (122) is disposed so that it is spaced apart from the first support (112),
the second contact surface (121) is formed at an end portion extending upward from the second support (122), and wherein
the second support (122) extends continuously in a circumferential direction of the second housing (120) or a plurality of the second supports (122) is formed at predetermined intervals in the circumferential direction of the second housing (120).

3. A device having the battery pack according to any one of claims 1 or 2.

4. The device according to claim 3, wherein the device is one of a computer, a cellular phone, a wearable electronic device, a power tool, an electric vehicle (EV), a hybrid electric vehicle, a plug-in hybrid electric vehicle, an electric two-wheeled vehicle, an electric golf cart, and an energy storage apparatus.

## Patentansprüche

1. Batteriepack, umfassend:
eine Gehäuseeinheit (100), welche dazu eingerichtet ist, eine Batteriezelle darin aufzunehmen, wobei die Gehäuseeinheit umfasst:
ein erstes Gehäuse (110), welches eine erste Kontaktfläche (111) umfasst, und
ein zweites Gehäuse (120), welches eine zweite Kontaktfläche (121) umfasst, welche entgegengesetzt zu der ersten Kontaktfläche (111) ist,
wobei das erste Gehäuse (110) und das zweite Gehäuse (120) durch Schweißen in einem Zustand gekoppelt sind, in welchem die erste Kontaktfläche (111) und die zweite Kontaktfläche (121) miteinander in Kontakt sind und gegeneinander gepresst sind,
wobei eine erste Halterung (112) an einer äußeren Fläche des ersten Gehäuses (110) bereitgestellt ist, wobei die erste Halterung (112) dazu eingerichtet ist, ein erstes Pressmodul (410) zu kontaktieren, welches das erste Gehäuse (110) in Richtung des zweiten Gehäuses (120) presst, und
wobei eine zweite Halterung (122) an einer äußeren Fläche des zweiten Gehäuses bereitgestellt ist, wobei die zweite Halterung (122) dazu eingerichtet ist, ein zweites Pressmodul (420) zu kontaktieren, welches das zweite Gehäuse (120) in Richtung des ersten Gehäuses (110) presst,
wobei die zweite Halterung (122) von der äußeren Fläche des zweiten Gehäuses (120) nach außen hervorsteht und in einer Flanschform gebildet ist, welche die zweite Kontaktfläche (121) umfasst,
wobei die erste Halterung (112) in einer Rippenform gebildet ist, welche von der äußeren Fläche des ersten Gehäuses (110) nach außen hervorsteht,
wobei die erste Halterung (112) derart angeordnet ist, dass sie von der zweiten Halterung (122) beabstandet ist,
wobei die erste Kontaktfläche (111) an einem Endabschnitt gebildet ist, welcher sich von der ersten Halterung (112) nach unten erstreckt, und
wobei sich die erste Halterung (112) in einer Umfangsrichtung des ersten Gehäuses (110) kontinuierlich erstreckt oder eine Mehrzahl der ersten Halterungen (112) in vorbestimmten Abständen in der Umfangsrichtung des ersten Gehäuses (110) gebildet ist.

2. Batteriepack, umfassend:
eine Gehäuseeinheit (100), welche dazu eingerichtet ist, eine Batteriezelle darin aufzunehmen, wobei die Gehäuseeinheit umfasst:
ein erstes Gehäuse (110), welches eine erste Kontaktfläche (111) umfasst, und
ein zweites Gehäuse (120), welches eine zweite Kontaktfläche (121) umfasst, welche entgegengesetzt zu der ersten Kontaktfläche (111) ist,
wobei das erste Gehäuse (110) und das zweite Gehäuse (120) durch Schweißen in einem Zustand gekoppelt sind, in welchem die erste Kontaktfläche (111) und die zweite Kontaktfläche (121) miteinander in Kontakt sind und gegeneinander gepresst sind,
wobei eine erste Halterung (112) an einer äußeren Fläche des ersten Gehäuses (110) bereitgestellt ist, wobei die erste Halterung (112) dazu eingerichtet ist, ein erstes Pressmodul (410) zu kontaktieren, welches das erste Gehäuse (110) in Richtung des zweiten Gehäuses (120) presst, und
wobei eine zweite Halterung (122) an einer äußeren Fläche des zweiten Gehäuses bereitgestellt ist, wobei die zweite Halterung (122) dazu eingerichtet ist, ein zweites Pressmodul (420) zu kontaktieren, welches das zweite Gehäuse (120) in Richtung des ersten Gehäuses (110) presst,
wobei die erste Halterung (112) von der äußeren Fläche des ersten Gehäuses (110) nach außen hervorsteht und in einer Flanschform gebildet ist, welche die erste Kontaktfläche (111) umfasst,
wobei die zweite Halterung (122) in einer Rippenform gebildet ist, welche von der äußeren Fläche des zweiten Gehäuses (120) nach außen hervorsteht,
wobei die zweite Halterung (122) derart angeordnet ist, dass sie von der ersten Halterung (112) beabstandet ist,
wobei die zweite Kontaktfläche (121) an einem Endabschnitt gebildet ist, welcher sich von der zweiten Halterung (122) nach oben erstreckt, und
wobei sich die zweite Halterung (122) in einer Umfangsrichtung des zweiten Gehäuses (120) kontinuierlich erstreckt oder eine Mehrzahl der zweiten Halterungen (122) in vorbestimmten Abständen in der Umfangsrichtung des zweiten Gehäuses (120) gebildet ist.

3. Vorrichtung, welche den Batteriepack nach einem der Ansprüche 1 oder 2 aufweist.

4. Vorrichtung nach Anspruch 3, wobei die Vorrichtung eines ist, aus einem Computer, einem Mobiltelefon, einer tragbaren elektronischen Vorrichtung, einem Elektrowerkzeug, einem Elektrofahrzeug (EV), einem hybriden Elektrofahrzeug, einem Plug-In-Hybrid Elektrofahrzeug, einem Elektrofahrzeug vom Zweiradtyp, einem Elektrogolfwagen und einer Energiespeichervorrichtung.

## Revendications

1. Bloc-batterie comprenant :
une unité de logement (100) configurée pour recevoir une cellule de batterie dans celle-ci, l'unité de logement comprenant :
un premier logement (110) comportant une première surface de contact (111) ; et
un deuxième logement (120) comportant une deuxième surface de contact (121) opposée à la première surface de contact (111), dans lequel
le premier logement (110) et le deuxième logement (120) sont accouplés par soudage dans un état dans lequel la première surface de contact (111) et la deuxième surface de contact (121) sont en contact l'une avec l'autre et pressées l'une contre l'autre,
un premier support (112) est disposé sur une surface extérieure du premier logement (110), le premier support (112) étant configuré pour entrer en contact avec un premier module de pressage (410) qui presse le premier logement (110) contre le deuxième logement (120), et
un deuxième support (122) est disposé sur une surface extérieure du deuxième logement, le deuxième support (122) étant configuré pour entrer en contact avec un deuxième module de pressage (420) qui presse le deuxième logement (120) contre le premier logement (110),
dans lequel le deuxième support (122) fait saillie vers l'extérieur à partir de la surface extérieure du deuxième logement (120) et est formé en une forme de bride comportant la deuxième surface de contact (121),
le premier support (112) est formé en une forme de nervure faisant saillie vers l'extérieur à partir de la surface extérieure du premier logement (110),
le premier support (112) est disposé de façon à être espacé du deuxième support (122),
la première surface de contact (111) est formée au niveau d'une partie d'extrémité s'étendant vers le bas à partir du premier support (112), et dans lequel
le premier support (112) s'étend en continu dans une direction circonférentielle du premier logement (110) ou une pluralité des premiers supports (112) est formée à des intervalles prédéterminés dans la direction circonférentielle du premier logement (110).

2. Bloc-batterie comprenant :
une unité de logement (100) configurée pour recevoir une cellule de batterie dans celle-ci, l'unité de logement comprenant :
un premier logement (110) comportant une première surface de contact (111) ; et
un deuxième logement (120) comportant une deuxième surface de contact (121) opposée à la première surface de contact (111), dans lequel
le premier logement (110) et le deuxième logement (120) sont accouplés par soudage dans un état dans lequel la première surface de contact (111) et la deuxième surface de contact (121) sont en contact l'une avec l'autre et pressées l'une contre l'autre,
un premier support (112) est disposé sur une surface extérieure du premier logement (110), le premier support (112) étant configuré pour entrer en contact avec un premier module de pressage (410) qui presse le premier logement (110) contre le deuxième logement (120), et
un deuxième support (122) est disposé sur une surface extérieure du deuxième logement, le deuxième support (122) étant configuré pour entrer en contact avec un deuxième module de pressage (420) qui presse le deuxième logement (120) contre le premier logement (110),
dans lequel le premier support (112) fait saillie vers l'extérieur à partir de la surface extérieure du premier logement (110) et est formé en une forme de bride comportant la première surface de contact (111),
dans lequel le deuxième support (122) est formé en une forme de nervure faisant saillie vers l'extérieur à partir de la surface extérieure du deuxième logement (120),
le deuxième support (122) est disposé de façon à être espacé du premier support (112),
la deuxième surface de contact (121) est formée au niveau d'une partie d'extrémité s'étendant vers le haut à partir du deuxième support (122), et dans lequel
le deuxième support (122) s'étend en continu dans une direction circonférentielle du deuxième logement (120) ou une pluralité des deuxièmes supports (122) est formée à des intervalles prédéterminés dans la direction circonférentielle du deuxième logement (120).

3. Dispositif présentant le bloc-batterie selon l'une quelconque des revendications 1 ou 2.

4. Dispositif selon la revendication 3, dans lequel le dispositif est un parmi un ordinateur, un téléphone portable, un dispositif électronique portatif, un outil motorisé, un véhicule électrique (VE), un véhicule électrique hybride, un véhicule électrique hybride rechargeable, un véhicule électrique à deux roues, une voiturette de golf électrique et un appareil de stockage d'énergie.
